# EUROPEAN PATENT SPECIFICATION

(11) **EP 4 513 043 B1**
(45) Date of publication and mention of the grant of the patent: **20.05.2026**
(21) Application number: 24167915.8
(22) Date of filing: 29.03.2024
(51) Int. Cl.: F16B 5/02, F16B 12/24, F16B 12/36, F16B 37/12

(54) **CONNECTOR FOR FIXING A LAMINATE BETWEEN TWO VERTICAL PLATES**
VERBINDER ZUR BEFESTIGUNG EINES LAMINATS ZWISCHEN ZWEI VERTIKALEN PLATTEN
CONNECTEUR POUR FIXER UN STRATIFIÉ ENTRE DEUX PLAQUES VERTICALES

(30) Priority: 23.08.2023 CN 202322275395 U
(43) Date of publication of application: 26.02.2025
(73) Proprietor: Lusterful Science and Technology Co., Ltd., 511540 Qingyuan Guangdong (CN)
(72) Inventor: LIU, Weiming, Qingyuan 511540 (CN)
(74) Representative: Scholl, Matthias

(56) References cited:
- EP-B1- 3 111 804
- US-A1- 2021 355 976

## Description

The disclosure relates to a connector for fixing a laminate between two vertical plates.

Conventional connectors include a connecting rod and an expansion sleeve sleeving the connecting rod, for the connection of side plates (vertical plates) and laminates (horizontal plates). For example, US 2021/355976 A1 describes a connector that can be used for connecting laminates. During installation, one end of the expansion connector is first inserted into a laminate, and then the laminate is approached perpendicularly to a side plate so that the other end of the expansion connector is installed into the side plate, thus achieving the connection of the laminate and the side plate. The connector cannot be used to fix a laminate between two vertical plates, and the connection between a laminate and a vertical plate with the connector is not firm.

One objective of the disclosure is to provide a connector for fixing a laminate between two vertical plates, and the installation process is easy to operate with high firmness.

The invention provides a connector for fixing a laminate between two vertical plates, according to claim 1, comprising: a sleeve, a connecting rod, an embedded part, a rear cover, and a compression spring. The sleeve is hollow and comprises two open ends; an inner wall of the sleeve comprises a limit step; the connecting rod is disposed in the sleeve and comprises a first end and a second end; the first end comprises a stop part matched with the limit step; the second end extends out of the sleeve; the rear cover is detachably disposed on a rear end of the sleeve; the compression spring is disposed in the sleeve and comprises a third end abutting against the rear cover and a fourth end abutting against the stop part; and the embedded part comprises an embedded nut and a fastener; the fastener is detachably disposed in the embedded nut and is connected to the second end of the connecting rod.

In a class of this embodiment, the rear end of the sleeve comprises a hole, and the rear cover comprises a buckle matched with the hole.

In a class of this embodiment, the sleeve comprises a front end surface comprising a first unidirectional reverse thread.

According to the invention, the fastener comprises a blind nut and a locking nut; the locking nut is disposed in the blind nut; and the blind nut is detachably disposed in the embedded nut.

According to the invention, the embedded nut comprises a limiting buckle for limiting the blind nut so that the blind nut is stably located in the embedded nut.

In a class of this embodiment, an outer surface of the embedded nut comprises a second unidirectional reverse thread.

In a class of this embodiment, a convex bar is disposed on the inner wall of the sleeve between the rear cover and the limit step; the stop part comprises a groove; and the convex bar is matched with the groove to guide the connecting rod to move axially.

The following advantages are associated with the connector for fixing a laminate between two vertical plates of the disclosure: the combination of the sleeve, the connecting rod, and the embedded part of the connector allows for the connection of a laminate (horizontal plate) with two vertical side plates; the installation is convenient and firm, and is a hidden connection.
FIG. 1 is a schematic diagram of a connector for fixing a laminate between two vertical plates in accordance with one embodiment of the disclosure;
FIG. 2 is an exploded view of a connector for fixing a laminate between two vertical plates in accordance with one embodiment of the disclosure;
FIG. 3 is a cross sectional view of a sleeve in accordance with one embodiment of the disclosure; and
FIG. 4 is a sectional view of a combination of a laminate (horizontal plate) with two vertical side plates in accordance with one embodiment of the disclosure.

To further illustrate the disclosure, embodiments detailing a connector for fixing a laminate between two vertical plates are described below. It should be noted that the following embodiments are intended to describe and not to limit the disclosure, which is solely limited by the wording of the appended claims.

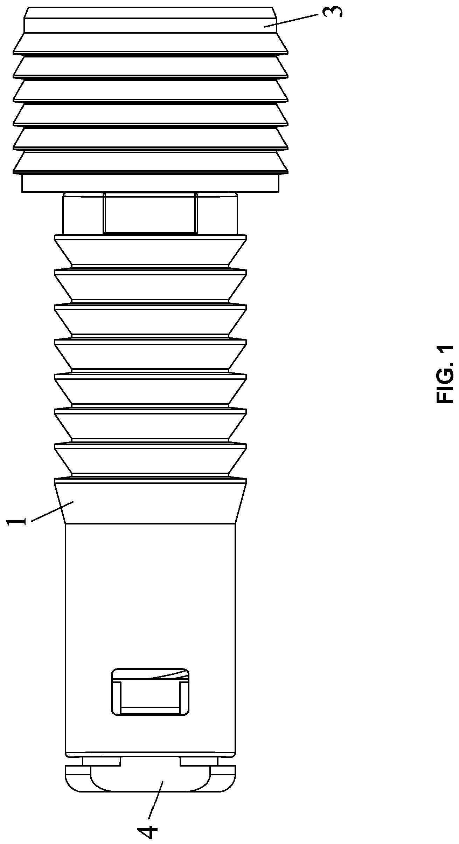

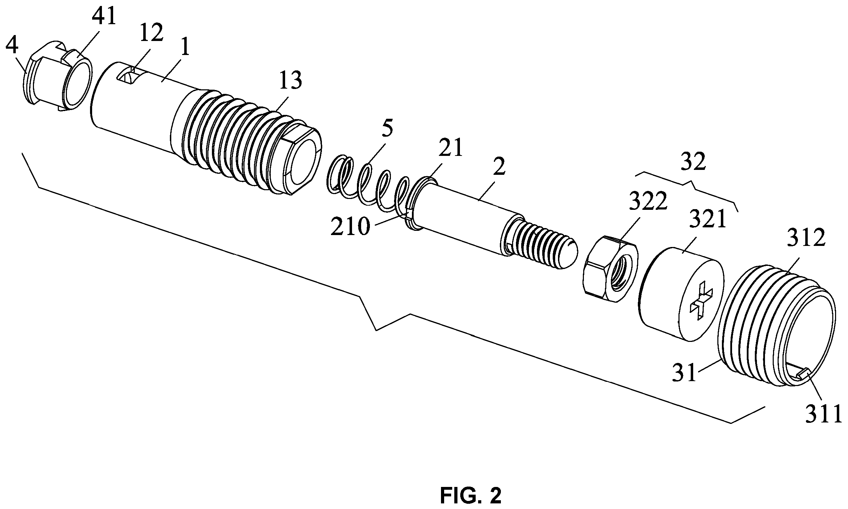

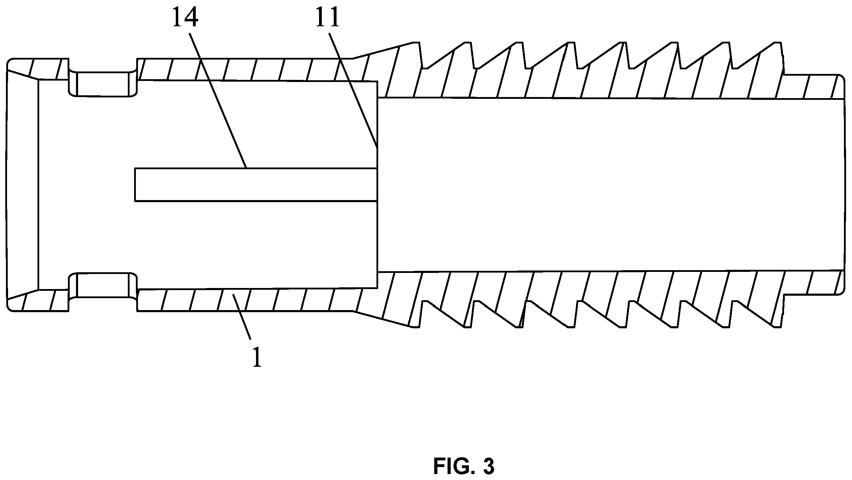

As shown in FIGS. 1-3, the disclosure provides a connector for laminates comprising: a sleeve 1, a connecting rod 2, an embedded part 3, a rear cover 4, and a compression spring 5. The sleeve 1 is hollow and comprises two open ends; the inner wall of the sleeve 1 comprises a limit step 11; the connecting rod 2 is disposed in the sleeve 1 and comprises a first end, a middle part, and a second end; the first end comprises a stop part 21 matched with the limit step 11; the middle part is the rod body; the second end comprises a threaded part. The diameter of the stop part 21 is larger than the diameter of the rod body. The diameter of the threaded part is smaller than the diameter of the rod body. The threaded part extends out of the sleeve 1. The rear cover 4 is detachably disposed on a rear end of the sleeve 1. The compression spring 5 is disposed in the sleeve 1 and comprises a third end abutting against the rear cover and a fourth end abutting against the stop part 21. The diameter of the compression spring 5 is larger than that of the stop part 21 and less than that of the sleeve 1. The embedded part 3 comprises an embedded nut 31 and a fastener 32; the fastener 32 is detachably disposed in the embedded nut 31 and is connected to the threaded part of the connecting rod 2. A convex bar 14 is disposed on the inner wall of the sleeve 1 between the rear cover 4 and the limit step 11. The convex bar 14 has a guiding effect and fits with a groove 210 radially disposed on the stop part 21, causing the stop part 21 to move up and down along the convex bar 14, so that the connecting rod 2 and the stop part 21 move steadily axially during the deformation process of the compression spring.

The rear end of the sleeve 1 comprises a hole 12, and the rear cover 4 comprises a buckle 41 matched with the hole 12, thus facilitating the detachment of the rear cover from the sleeve. The sleeve 1 comprises a front end surface comprising a first unidirectional reverse thread 13. In the mounting process, the first unidirectional reverse thread 13 is smoothly screwed into a laminate without obstruction; to pull out the sleeve, the friction between the first unidirectional reverse thread and the laminate requires to be overcome, which is difficult, thus improving the stability of the installation of the laminate.

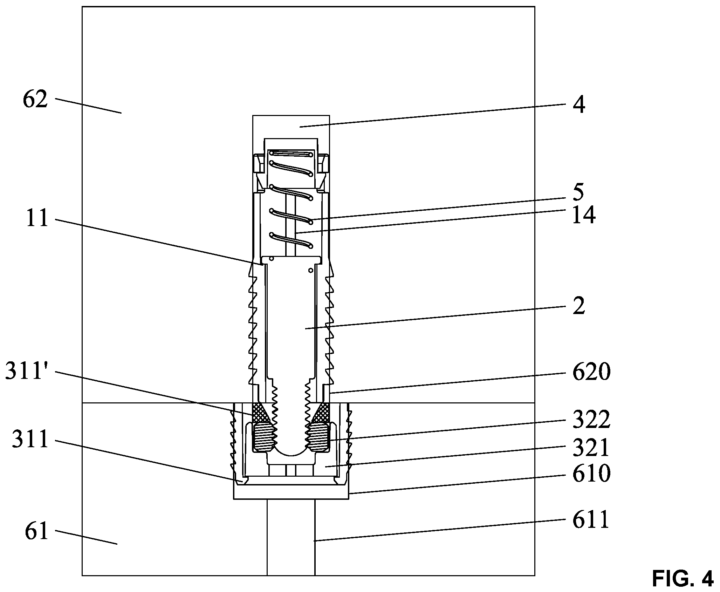

The fastener 32 comprises a blind nut 321 and a locking nut 322; the locking nut 322 is disposed in the blind nut 321. The internal structure of the blind nut 321 is designed to match the external shape of the locking nut 322, which can be a hexagonal nut or other types of nuts. The external structure of the blind nut 321 is cylindrical, with one end open and the other end closed. The center of the closed end comprises a cross hole that can be inserted with a tool such as an electric screwdriver to twist the embedded part to lock the side plate of the laminate. The cross hole can be replaced by a straight hole, or a hexagonal hole. The blind nut 321 is detachably disposed in the embedded nut 31. One end of the embedded nut 31 is open, and the other end is provided with a limiting buckle 311 for limiting the blind nut so that the blind nut is stably located in the embedded nut. The center part of the blind nut 321 is a counter bore (countersunk hole). The outer surface of the embedded nut 31 comprises a second unidirectional reverse thread 312, which has the same function as the first unidirectional reverse thread. Specifically, the first unidirectional reverse thread 13 is disposed on the front surface of the sleeve 1. When the sleeve 1 enters a mounting hole position, as shown in FIG. 4, the profile of the first unidirectional reverse thread 13 is conical, so that the sleeve is easy to enter the mounting hole position. The conical bottom surface is stuck on the wall, so it is difficult to pull out the sleeve. The direction of the second unidirectional reverse thread 312 on the embedded nut 31 entering the mounting hole position and the thread direction are opposite to the first unidirectional reverse thread 13, so that is it also difficult to pull the embedded nut 31 out of the mounting hole position on the lower panel. And the two plates of the two mounting hole are connected through the connecting rod 2.

According to the invention, both ends of the embedded nut 31 are open, and limit mechanisms are disposed at the openings to limit the blind nut 321 to rotate within the cavity of the embedded nut 31. The opening of one end of the embedded nut 31 receives the extension end of the connecting rod 2, and a limit mechanism 311' is disposed circumferentially or symmetrically on the open end. The limiting buckle 311 is symmetrically or circumferentially disposed at the other end of the embedded nut 31, and is a unidirectional chamfered structure used for the blind nut 321 to slide unidirectionally into the cavity of the embedded nut 31 along the limit buckle 311.

When installing, first, holes 610 are respectively preset in a first laminate 61 and a second laminate. The embedded part is placed in the hole of the first laminate, and the sleeve 1 and the connecting rod 2 are disposed in the hole 620 of the second laminate 62. Combine the first laminate and the second laminate, and the threaded end of the connecting rod 2 is inserted in the embedded part 3. Turn the embedded part 3 by an electric screwdriver through a blind hole 611 to lock the connecting rod 2, thus achieving the installation of the first laminate and the second laminate.

Optionally, the embedded part 3 can also be installed in the side plate, and the sleeve 1 and connecting rod 2 can be correspondingly installed in the horizontal plate.

The combination of the sleeve 1, the connecting rod 2, and the embedded part 3 of the connector allows for the connection of a laminate (horizontal plate) with two vertical side plates; the installation is convenient and firm, and is a hidden connection.

It will be obvious to those skilled in the art that changes and modifications may be made, and therefore, the aim in the appended claims is to cover all such changes and modifications.

## Claims

1. A connector for fixing a laminate between two vertical plates, the connector comprising:
a sleeve (1);
a connecting rod (2);
an embedded part (3);
a rear cover (4); and
a compression spring (5);
wherein:
the sleeve (1) is hollow and comprises two open ends; an inner wall of the sleeve (1) comprises a limit step (11);
the connecting rod (2) is disposed in the sleeve (1) and comprises a first end and a second end; the first end comprises a stop part (21) matched with the limit step (11); the second end extends out of the sleeve (1);
the rear cover (4) is detachably disposed on a rear end of the sleeve (1);
the compression spring (5) is disposed in the sleeve (1) and comprises a third end abutting against the rear cover (4) and a fourth end abutting against the stop part (21);
the embedded part (3) comprises an embedded nut (31) and a fastener (32); the fastener (32) is detachably disposed in the embedded nut (31) and is connected to the second end of the connecting rod (2);
the fastener (32) comprises a blind nut (321) and a locking nut (322); the locking nut (322) is disposed in the blind nut (321); and the blind nut (321) is detachably disposed in the embedded nut (31);
wherein the embedded nut (31) comprises a first nut end and a second nut end; each of the first nut end and the second nut end comprises an opening; the opening of the first nut end receives an extension end of the connecting rod (2), and a limit mechanism (311') is disposed circumferentially or symmetrically at the first nut end to limit the blind nut (321) to rotate within a cavity of the embedded nut (31); a limiting buckle (311) is symmetrically or circumferentially disposed at the second nut end and is a chamfered structure allowing for the blind nut (321) to slide unidirectionally into the cavity of the embedded nut (31) along the limit buckle (311); and
when the connector is used for connecting a first laminate (61) and a second laminate (62): installation holes (610, 620) are respectively preset in the first laminate (61) and the second laminate (62); the embedded part (3) is placed in the installation hole (610) of the first laminate (61), and the sleeve (1) and the connecting rod (2) are disposed in the installation hole (620) of the second laminate (620); the first laminate (61) and the second laminate (62) are combined, and a threaded end of the connecting rod (2) is inserted in the embedded part (3); and the embedded part (3) is turned by an electric screwdriver through a blind hole (611) in the first laminate (61) to lock the connecting rod (2), thus connecting the first laminate (61) and the second laminate (62).

2. The connector of claim 1, wherein the rear end of the sleeve (1) comprises a hole (12), and the rear cover (4) comprises a buckle (41) matched with the hole (12).

3. The connector of claim 1 or 2, wherein the sleeve (1) comprises a front end surface comprising a first unidirectional reverse thread (13).

4. The connector of claim 3, wherein an outer surface of the embedded nut (31) comprises a second unidirectional reverse thread (312).

5. The connector of claim 1, wherein a convex bar (14) is disposed on the inner wall of the sleeve (1) between the rear cover (4) and the limit step (11); the stop part (21) comprises a groove (210); and the convex bar (14) is matched with the groove (210) to guide the connecting rod (2) to move axially.

## Patentansprüche

1. Verbinder zum Befestigen eines Laminats zwischen zwei vertikalen Platten, wobei der Verbinder Folgendes umfasst:
eine Hülse (1);
einen Verbindungsstab (2);
einen eingebetteten Teil (3);
eine hintere Abdeckung (4); und
eine Druckfeder (5);
wobei:
die Hülse (1) hohl ist und zwei offene Enden umfasst; eine innere Wand der Hülse (1) eine Begrenzungsstufe (11) umfasst;
der Verbindungsstab (2) in der Hülse (1) angeordnet ist und ein erstes Ende und ein zweites Ende umfasst; das erste Ende einen Anschlagteil (21) umfasst, der an die Begrenzungsstufe (11) angepasst ist; das zweite Ende sich aus der Hülse (1) heraus erstreckt;
die hintere Abdeckung (4) lösbar an einem hinteren Ende der Hülse (1) angeordnet ist;
die Druckfeder (5) in der Hülse (1) angeordnet ist und ein drittes Ende, das an der hinteren Abdeckung (4) anliegt, und ein viertes Ende, das an dem Anschlagteil (21) anliegt, umfasst;
der eingebettete Teil (3) eine eingebettete Mutter (31) und ein Anbringungsmittel (32) umfasst; das Anbringungsmittel (32) lösbar in der eingebetteten Mutter (31) angeordnet ist und mit dem zweiten Ende des Verbindungsstabs (2) verbunden ist;
das Anbringungsmittel (32) eine Blindmutter (321) und eine Sicherungsmutter (322) umfasst; die Sicherungsmutter (322) in der Blindmutter (321) angeordnet ist; und die Blindmutter (321) lösbar in der eingebetteten Mutter (31) angeordnet ist;
wobei die eingebettete Mutter (31) ein erstes Mutternende und ein zweites Mutternende umfasst; jedes von dem ersten Mutternende und dem zweiten Mutternende eine Öffnung umfasst; die Öffnung des ersten Mutternendes ein Verlängerungsende des Verbindungsstabs (2) aufnimmt und ein Begrenzungsmechanismus (311') umlaufend oder symmetrisch an dem ersten Mutternende angeordnet ist, um die Blindmutter (321) zu begrenzen, sich in einem Hohlraum der eingebetteten Mutter (31) zu drehen; eine Begrenzungsbeule (311) symmetrisch oder umlaufend an dem zweiten Mutternende angeordnet ist und eine abgeschrägte Struktur ist, die es der Blindmutter (321) ermöglicht, unidirektional in den Hohlraum der eingebetteten Mutter (31) entlang der Begrenzungsbeule (311) zu gleiten; und
wenn der Verbinder zum Verbinden eines ersten Laminats (61) und eines zweiten Laminats (62) verwendet wird: Installationslöcher (610, 620) jeweils in dem ersten Laminat (61) und dem zweiten Laminat (62) voreingestellt sind; der eingebettete Teil (3) in dem Installationsloch (610) des ersten Laminats (61) platziert wird und die Hülse (1) und der Verbindungsstab (2) in dem Installationsloch (620) des zweiten Laminats (62) angeordnet werden; das erste Laminat (61) und das zweite Laminat (62) kombiniert werden und ein Gewindeende des Verbindungsstabs (2) in den eingebetteten Teil (3) eingeführt wird; und der eingebettete Teil (3) durch einen elektrischen Schraubendreher durch ein Blindloch (611) in dem ersten Laminat (61) gedreht wird, um den Verbindungsstab (2) zu verriegeln, wodurch das erste Laminat (61) und das zweite Laminat (62) verbunden werden.

2. Verbinder nach Anspruch 1, wobei das hintere Ende der Hülse (1) ein Loch (12) umfasst und die hintere Abdeckung (4) eine Beule (41) umfasst, die an das Loch (12) angepasst ist.

3. Verbinder nach Anspruch 1 oder 2, wobei die Hülse (1) eine vordere Endoberfläche umfasst, die ein erstes unidirektionales umgekehrtes Gewinde (13) umfasst.

4. Verbinder nach Anspruch 3, wobei eine Außenoberfläche der eingebetteten Mutter (31) ein zweites unidirektionales umgekehrtes Gewinde (312) umfasst.

5. Verbinder nach Anspruch 1, wobei eine konvexe Stange (14) an der inneren Wand der Hülse (1) zwischen der hinteren Abdeckung (4) und der Begrenzungsstufe (11) angeordnet ist; der Anschlagteil (21) eine Nut (210) umfasst; und die konvexe Stange (14) an die Nut (210) angepasst ist, um den Verbindungsstab (2) zu führen, sodass er sich axial bewegt.

## Revendications

1. Connecteur pour fixer un stratifié entre deux plaques verticales, le connecteur comprenant :
un manchon (1) ;
une tige de liaison (2) ;
une partie encastrée (3) ;
un couvercle arrière (4) ; et
un ressort de compression (5) ;
ledit manchon (1) étant creux et comprenant deux extrémités ouvertes ; une paroi interne du manchon (1) comprenant un gradin de limite (11) ;
ladite tige de liaison (2) étant disposée dans le manchon (1) et comprenant une première extrémité et une deuxième extrémité ; ladite première extrémité comprenant une partie butée (21) adaptée au gradin de limite (11) ; ladite deuxième extrémité s'étendant hors du manchon (1) ;
ledit couvercle arrière (4) étant disposé de manière amovible sur une extrémité arrière du manchon (1) ;
ledit ressort de compression (5) étant disposé dans le manchon (1) et comprenant une troisième extrémité en butée contre le couvercle arrière (4) et une quatrième extrémité en butée contre la partie butée (21) ;
ladite partie encastrée (3) comprenant un écrou encastré (31) et un élément de fixation (32) ; ledit élément de fixation (32) étant disposé de manière amovible dans l'écrou encastré (31) et étant relié à la deuxième extrémité de la tige de liaison (2) ;
ledit élément de fixation (32) comprenant un écrou borgne (321) et un écrou de blocage (322) ; ledit écrou de blocage (322) étant disposé dans l'écrou borgne (321) ; et ledit écrou borgne (321) étant disposé de manière amovible dans l'écrou encastré (31) ;
ledit écrou encastré (31) comprenant une première extrémité d'écrou et une seconde extrémité d'écrou ; chacune de la première extrémité d'écrou et de la seconde extrémité d'écrou comprenant une ouverture ; l'ouverture de la première extrémité d'écrou recevant une extrémité d'extension de la tige de liaison (2), et un mécanisme de limite (311') étant disposé circonférentiellement ou de manière symétrique au niveau de la première extrémité d'écrou pour limiter la rotation de l'écrou borgne (321) à l'intérieur d'une cavité de l'écrou encastré (31) ; une boucle de limite (311) étant disposée de manière symétrique ou circonférentiellement au niveau de la seconde extrémité d'écrou et étant une structure chanfreinée permettant à l'écrou borgne (321) de coulisser de manière unidirectionnelle dans la cavité de l'écrou encastré (31) le long de la boucle de limite (311) ; et
lorsque le connecteur est utilisé pour relier un premier stratifié (61) et un second stratifié (62) : les trous d'installation (610, 620) sont respectivement prédéfinis dans le premier stratifié (61) et le second stratifié (62) ; ladite partie encastrée (3) étant placée dans le trou d'installation (610) du premier stratifié (61), et ledit manchon (1) et ladite tige de liaison (2) étant disposés dans le trou d'installation (620) du second stratifié (62) ; ledit premier stratifié (61) et ledit second stratifié (62) étant combinés, et une extrémité filetée de la tige de liaison (2) étant insérée dans la partie encastrée (3) ; et ladite partie encastrée (3) étant tournée par un tournevis électrique à travers un trou borgne (611) dans le premier stratifié (61) pour verrouiller la tige de liaison (2), reliant ainsi le premier stratifié (61) et le second stratifié (62).

2. Connecteur selon la revendication 1, ladite extrémité arrière du manchon (1) comprenant un trou (12), et ledit couvercle arrière (4) comprenant une boucle (41) adaptée au trou (12).

3. Connecteur selon la revendication 1 ou 2, ledit manchon (1) comprenant une surface d'extrémité avant comprenant un premier filetage inverse unidirectionnel (13).

4. Connecteur selon la revendication 3, une surface externe de l'écrou encastré (31) comprenant un second filetage inverse unidirectionnel (312).

5. Connecteur selon la revendication 1, une barre convexe (14) étant disposée sur la paroi interne du manchon (1) entre le couvercle arrière (4) et le gradin de limite (11) ; ladite partie butée (21) comprenant une rainure (210) ; et ladite barre convexe (14) étant adaptée à la rainure (210) pour guider la tige de liaison (2) afin qu'elle se déplace axialement.
